# EUROPÄISCHE PATENTSCHRIFT

(11) **EP 2 853 024 B1**
(45) Veröffentlichungstag und Bekanntmachung des Hinweises auf die Patenterteilung: **21.11.2018**
(21) Anmeldenummer: 13715655.0
(22) Anmeldetag: 03.04.2013
(51) Int. Cl.: H02M 7/219

(54) **UMRICHTER FÜR EINE ELEKTRISCHE MASCHINE MIT ÜBERWACHUNG DER KONTAKTIERUNG DER HALBLEITERBAUELEMENTE**
CONVERTER FOR AN ELECTRIC MACHINE WITH MONITORING OF THE CONTACTS OF THE SEMICONDUCTOR DEVICES
CONVERTISSEUR POUR MACHINE ÉLECTRIQUE AVEC SURVEILLANCE DES CONTACTS DES DISPOSITIFS À SEMICONDUCTEUR

(30) Priorität: 21.05.2012 DE 102012208460
(43) Veröffentlichungstag der Anmeldung: 01.04.2015
(73) Patentinhaber: Robert Bosch GmbH, 70442 Stuttgart (DE); SEG Automotive Germany GmbH, 70499 Stuttgart (DE)
(72) Erfinder: SCHUELER, Harald, 71522 Backnang (DE); RICHTER, Martin, 39340 Haldensleben (DE); KOLLER, Oliver Dieter, 71384 Weinstadt (DE)
(86) Internationale Anmeldenummer: PCT/EP2013/056988
(87) Internationale Veröffentlichungsnummer: WO 2013/174558

(56) Entgegenhaltungen:
- EP-A1- 1 986 203
- US-A1- 2003 076 232
- US-A1- 2012 049 782

## Beschreibung

Die vorliegende Erfindung betrifft einen Umrichter für eine elektrische Maschine.

### Stand der Technik

Man kann in elektrischen Maschinen im generatorischen Betriebsmodus sinusförmige Wechselspannungen erzeugen. Um das Bordnetz mit Energie zu versorgen, werden diese durch leistungselektronische Brückenschaltungen in Gleichspannungen transformiert. Hierfür werden üblicherweise Dioden eingesetzt.

Um zusätzlich motorische Betriebszustände bereitstellen zu können und gleichzeitig durch eine aktive Gleichrichtung den Wirkungsgrad des Generatorbetriebs zu verbessern, können diese Dioden durch MOSFETs oder IGBTs ersetzt werden. Eine geeignete Ansteuerung der MOSFETs bzw. IGBTs könnte sowohl motorische als auch generatorische Betriebszustände realisieren. Die Aufbau- und Verbindungstechnik (AVT) der Transistoren degradiert beispielsweise durch zunehmende Zerrüttung des Lots oder Risse in einer Bondanbindung über Betriebsdauer und stellt daher ein Ausfallrisiko für das Gesamtsystems dar.

Dokument US 2003/0076232 A1 offenbart einen Umrichter für eine elektrische Maschine mit einem an zumindest einer Kontaktierung verbundenen Halbleiterbauelement zum Umrichten einer Spannung und einem Steuergerät zum Steuern des Halbleiterbauelements, wobei der Umrichter ein erstes, mit einer ersten Kontaktierung verbundenes Halbleiterbauelement und ein zweites, mit einer zweiten Kontaktierung verbundenes Halbleiterbauelement aufweist.

Dokument EP 1 986 203 A1 offenbart ein Verfahren zur Feststellung des Vorhandenseins einer Kontaktisolierschicht bei einem kontaktbehafteten Schaltelement mittels Spannungsmessung. Dort wird darauf hingewiesen, dass sich die Isolierschicht auch an nicht schaltenden Kontakten bilden kann.

### Offenbarung der Erfindung

Es ist die der Erfindung zugrundeliegende Aufgabe, einen Umrichter anzugeben, der das Ausfallrisiko verkleinert.

Diese Aufgabe wird durch die Merkmale des unabhängigen Vorrichtungsanspruchs 1 und des hierzu korrespondierenden unabhängigen Verfahrensanspruchs 13 gelöst. Vorteilhafte Ausführungsformen der Erfindung sind in den abhängigen Ansprüchen definiert.

Die vorliegende Erfindung basiert auf der Erkenntnis, dass es vorteilhaft ist, den Zustand einer Kontaktierung eines elektronischen Bauelementes zu erfassen, um gegebenenfalls Gegenmaßnahmen einleiten zu können.

### Vorteile der Erfindung

Gemäß einem Aspekt der Erfindung wird die erfindungsgemäße Aufgabe durch einen Umrichter für eine elektrische Maschine mit einem an einer Kontaktierung verbundenen Halbleiterbauelement zum Umrichten einer Spannung, einer Spannungsmesseinrichtung zum Messen eines Spannungsabfalls über dem Halbleiterbauelement und einem Steuergerät zum Steuern des Halbleiterbauelements gelöst, wobei das Steuergerät ausgebildet ist, den Zustandes der Kontaktierung des Halbleiterbauelements anhand des gemessenen Spannungsabfalls zu bestimmen. Im Allgemeinen kann der Umrichter ein oder mehrere Halbleiterbauelemente umfassen, die mit einem oder mehreren Kontaktierungen thermisch und elektrisch verbunden sind. Durch diese allgemeine Form des Umrichters wird beispielsweise der Vorteil erreicht, dass die Degradation eines Lotes an zumindest einem oder mehreren beliebigen Halbleiterbauelementen mit einfachen technischen Mitteln über einen Spannungsabfall erfasst werden kann, so dass geeignete Maßnahmen ergriffen werden können, um einen Ausfall des Umrichters zu vermeiden.

In einer vorteilhaften Ausführungsform ist das Halbleiterbauelement ein Halbleiterschalter. Dadurch wird beispielsweise der technische Vorteil erreicht, dass steuerbare Halbleiteschalter zum Umrichten der Spannung verwendet werden. Ein Halbleiterschalter ist ein steuerbares, elektronisches Bauelement zum Schalten und Verstärken von elektrischen Signalen, wie beispielsweise ein Transistor.

In einer weiteren vorteilhaften Ausführungsform ist das Halbleiterbauelement ein Metall-Oxid-Halbleiter-Feldeffekttransistor (MOSFET) oder ein Bipolartransistor mit isolierter Gate-Elektrode (IGBT). Dadurch wird beispielsweise der technische Vorteil erreicht, dass besonders geeignete Bauelemente zum Umrichten hoher Ströme verwendet werden.

In einer weiteren vorteilhaften Ausführungsform ist die Spannungsmesseinrichtung elektrisch mit einem Drain-Anschluss und einem Source-Anschluss des MOSFET verbunden oder die Spannungsmesseinrichtung ist elektrisch mit einem Kollektor und einem Emitter des IGBT's verbunden. Dadurch wird der technische Vorteil erreicht, dass thermisch beanspruchte Anschlüsse und Kontaktierungen des Umrichters überwacht werden können.

In einer weiteren vorteilhaften Ausführungsform umfasst der Umrichter eine Strommesseinrichtung zum Messen eines Stromes durch das Halbleiterbauelement. Dadurch wird beispielsweise der technische Vorteil erreicht, dass neben einem Spannungsabfall als zusätzlicher Parameter ein Strom durch das Halbleiterbauelement bestimmt wird und sich die Genauigkeit der Bestimmung des Zustands der Kontaktierung verbessert.

In einer weiteren vorteilhaften Ausführungsform umfasst die Strommesseinrichtung einen Shunt-Widerstand. Dadurch wird beispielsweise der technische Vorteil erreicht, dass sich der Strom auf besonders geeignete Weise und mit einfachen technischen Mitteln bestimmen lässt.

In einer weiteren vorteilhaften Ausführungsform umfasst der Umrichter eine Temperaturmesseinrichtung zum Messen einer Temperatur des Halbleiterbauelementes. Dadurch wird beispielsweise ebenfalls der technische Vorteil erreicht, dass als zusätzlicher Parameter eine Temperatur des Halbleiterbauelementes bestimmt wird und sich die Genauigkeit der Bestimmung des Zustandes der Kontaktierung verbessert. Daneben kann sichergestellt werden, dass der Spannungsabfall bei einer bestimmten Temperatur erfasst wird, so dass sich eine Vergleichbarkeit der ermittelten Werte verbessert.

In einer weiteren vorteilhaften Ausführungsform umfasst der Umrichter ein erstes, an einer ersten Kontaktierung verbundenes Halbleiterbauelement und ein zweites, an einer zweiten Kontaktierung verbundenes Halbleiterbauelement und die Spannungsmesseinrichtung ist ausgebildet, einen ersten Spannungsabfall über dem ersten Halbleiterbauelement und einen zweiten Spannungsabfall über dem zweiten Halbleiterbauelement zu messen. Dadurch wird beispielsweise der technische Vorteil erreicht, dass mehrere Kontaktierungen gleichzeitig überwacht werden können.

In einer weiteren vorteilhaften Ausführungsform ist der Umrichter ausgebildet, den ersten Spannungsabfall und den zweiten Spannungsabfall zu vergleichen. Dadurch wird beispielsweise der technische Vorteil erreicht, dass durch direkten Vergleich von zwei Kontaktierungen bestimmt werden kann, welche der Kontaktierungen einen kritischen Zustand aufweist.

In einer weiteren vorteilhaften Ausführungsform ist das Steuergerät ausgebildet, eine Spannungsverlaufskurve des Spannungsabfalls über dem Halbleiterbauelement-in Abhängigkeit einer Betriebszeit des Halbleiterbauelementes zu bestimmen. Dadurch wird beispielsweise ebenfalls der technische Vorteil erreicht, dass sich eine Genauigkeit der Bestimmung des Zustandes des Bauelements verbessert und Tendenzen über Betriebsdauer detektiert werden können.

In einer weiteren vorteilhaften Ausführungsform ist das Steuergerät ausgebildet, einen zeitlichen Ableitungswert der Spannungsverlaufskurve zu bestimmen. Dadurch wird beispielsweise der technische Vorteil erreicht, dass eine thermische Impedanz ermittelt werden kann, die als weiteres Beurteilungskriterium herangezogen werden kann.

In einer weiteren vorteilhaften Ausführungsform umfasst das Steuergerät einen Speicher zum Speichern von Spannungsverlaufskurven oder Spannungsabfallwerten zu einem bestimmten Zeitpunkt. Dadurch wird beispielsweise der technische Vorteil erreicht, dass in dem Steuergerät die Werte über einen längeren Betriebszeitraum des Umrichters erfasst werden und sich eine Datenbasis erhöht.

In einer weiteren vorteilhaften Ausführungsform ist das Steuergerät ausgebildet, im Speicher zu unterschiedlichen Zeitpunkten gespeicherte Spannungsverlaufskurven oder Spannungsabfälle zu vergleichen. Dadurch wird beispielsweise der technische Vorteil erreicht, dass sich ein zeitlicher Verlauf und eine schleichende Degradation des Lotes anhand der Datenbasis erkennen lassen oder Ausreißer der Messung erkannt werden.

In einer weiteren vorteilhaften Ausführungsform ist in dem Speicher eine Referenzspannungskurve vorgespeichert. Dadurch wird beispielsweise der technische Vorteil erreicht, dass bei Abweichungen einer gemessenen Spannungsabfallkurve von der Referenzkurve eine Degradation des Lotes festgestellt werden kann.

In einer weiteren vorteilhaften Ausführungsform umfasst der Umrichter die Möglichkeit, den aktuellen Zustand an eine übergeordnete Regeleinheit zu übermitteln, die darauf dementsprechend reagiert und Gegenmaßen einleitet. Dadurch wird beispielsweise der technische Vorteil erreicht, dass bei ansetzender Degradation eines Lotes eine Belastung des Halbleiterbauelementes verringert werden kann.

Gemäß einem weiteren Aspekt der Erfindung wird die erfindungsgemäße Aufgabe durch ein Verfahren zum Umrichten einer Spannung mit einem Umrichter für eine elektrische Maschine mit einem an zumindest einer Kontaktierung verbundenen Halbleiterbauelement gelöst, mit den Schritten eines Messens eines Spannungsabfalls über dem Halbleiterbauelement, eines Bestimmens des Zustands der Kontaktierung anhand des gemessenen Spannungsabfalls und eines Steuerns des Halbleiterbauelements in Abhängigkeit des bestimmten Zustands der Kontaktierung. Dadurch werden die gleichen technischen Vorteile, wie durch die entsprechende Vorrichtung erzielt.

### Kurze Beschreibung der Zeichnungen

Ausführungsbeispiele der Erfindung sind in der Zeichnung dargestellt und werden im Folgenden näher beschrieben.

Es zeigen:
- Fig. 1: eine schematische Ansicht eines erfindungsgemäßen Umrichters;
- Fig. 2: einen Verlauf eines Spannungsabfalls während einem Betrieb eines Halbleiterbauelementes; und
- Fig. 3: einen Verlauf eines Spannungsabfalls während einem Betrieb eines Halbleiterbauelementes und den Verlauf einer Anfangsspannung in Abhängigkeit einer Gesamtbetriebszeit.

### Ausführungsformen der Erfindung

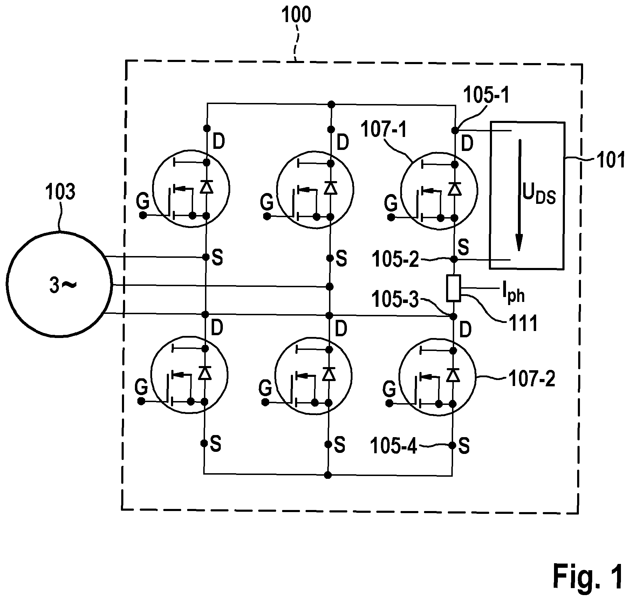

Fig. 1 zeigt eine schematische Ansicht eines Umrichters 100 für eine dreiphasige elektrische Maschine 103 mit einer Spannungsmesseinrichtung 101 zum Messen eines Spannungsabfalls U_{DS} über einem Halbleiterbauelement 107-1.

Der Wechselrichter 100 wandelt beispielsweise eine von einer Fahrzeugbatterie zugeführte Eingangsspannung in eine dreiphasige Wechselspannung für die elektrische Maschine 103 um. Zu diesem Zweck umfasst der Wechselrichter 100 sechs Halbleiterbauelemente 107-1, 107-2. Diese Bauelemente 107-1, 107-2 werden beispielsweise durch MOSFET oder durch IGBT gebildet, die von einer nicht gezeigten Steuereinheit derart geschaltet werden, dass ein dreiphasiger Wechselstrom entsteht. Die Erfindung ist nicht auf den gezeigten Wechselrichter beschränkt, sondern kann im Allgemeinen für jeden beliebigen Umrichter verwendet werden.

Die Halbleiterbauelemente 107-1, 107-2 sind mit der übrigen Schaltung an Kontaktierungspunkten oder Anbindungspunkten 105-1, 105-2, 105-3, 105-4 elektrisch, mechanisch und thermisch verbunden. Die elektrische oder mechanische Anbindung an den Kontaktierungspunkten 105-1, 105-2, 105-3, 105-4 wird durch eine geeignete Aufbau- und Verbindungstechnik (AVT) realisiert.

Die Halbleiterbauelemente 107-1, 107-2 sind beispielsweise zusammen mit anderen Bauteilen auf einer Platine oder einem Schaltungsbrett an den Kontaktierungspunkten 105-1, 105-2, 105-3, 105-4 verlötet, so dass eine elektrische Kontaktierung des entsprechenden Bauteils erfolgt. Zum Verlöten der Bauteile können Lote mit unterschiedlichen Eigenschaften verwendet werden. Das Lot ist eine Metall-Legierung, die je nach Einsatzzweck aus bestimmten Mischungsverhältnissen von Metallen besteht, wie beispielsweise Blei, Zinn, Zink, Silber und Kupfer.

Allerdings kann die Aufbau- und Verbindungstechnik der Halbleiterbauelemente beispielsweise durch eine zunehmende Zerrüttung des Lots oder Risse in einer Bondanbindung über die Betriebsdauer aufgrund von thermischen Schwankungen oder anderen Umwelteinflüssen degradieren. Dieser Umstand stellt ein Ausfallrisiko für das Gesamtsystems dar.

Die Degradation der Aufbau- und Verbindungstechnik über die Betriebsdauer des Wechselrichters 100 hinweg führt zu einer Verringerung der mechanischen Kontaktierung und somit zu einer spürbaren Vergrößerung der thermischen Impedanz. Da dadurch die Wärme des Halbleiterbauelements 107-1, 107-2 unzureichend abgeführt wird, entsteht für das Halbleiterbauelement 107-1, 107-2 eine zusätzliche thermische Belastung.

Diese thermische Belastung führt bei Halbleiterbauelementen 107-1, 107-2 mit einem positiven Temperaturkoeffizient zu einer zusätzlichen Erwärmung, da diese mit zunehmender Temperatur einem größeren elektrischen Durchlasswiderstand besitzen. Dadurch steigen wiederum die Verlustleistung und die aus dem Halbleiterbauelement 107-1, 107-2 abzuführende Wärme. Wird die Wärme nicht abgeführt, entsteht eine Rückkopplung die zu einer immer stärkeren Erwärmung des Halbleiterbauelementes 107-1, 107-2 führt.

Der beschriebene Rückkopplungseffekt führt zu einer schnellen Alterung mit frühzeitigem Ausfall oder Zerstörung des Halbleiterbauelementes, da dessen zulässige Grenztemperatur überschritten wird. Ein derartiger Ausfall geschieht oftmals plötzlich und unerwartet.

Aus diesem Grund ist es vorteilhaft, einen kritischen Zustand der Aufbau- und Verbindungstechnik rechtzeitig zu erkennen und durch geeignete Maßnahmen den Degradationsvorgang zu verlangsamen. Zu diesem Zweck wird der Zustand der Aufbau- und Verbindungstechnik während des Betriebs des Wechselrichters 100 überwacht. Es wird detektiert, wenn der Zustand der Anbindung oder Kontaktierung des Transistors sich verschlechtert. Im Allgemeinen handelt es sich hierbei um eine Verschlechterung der Lotschicht. Die Veränderung in der Anbindung kann dadurch erkannt werden, dass Wärme schlechter aus dem Inneren des Halbleiters abgeleitet werden kann und damit höhere elektrische Spannungen entstehen.

Der Zustand der Anbindung oder Kontaktierung ist durch die Fähigkeit der Anbindung oder Kontaktierung gegeben, Wärme abführen zu können. Eine Zustandsverschlechterung kann beispielsweise durch Risse im Lot oder durch eine Oxidation verursacht werden.
Falls eine zunehmende Degradation durch das Diagnosesystem erkannt wird, kann durch Abregeln auf diese Diagnose reagiert werden. Dieses können klassische Abregelungsmaßnahmen wie z.B. eine Reduktion der Maximalleistungen bzw. Verringerung der maximalen Dauer der motorischen und generatorischen Betriebszustände (Rekuperation/Boost) sein oder eine Anpassung der Betriebsstrategie, die Temperaturhübe und somit die Belastung der Halbleiterelemente reduziert. Damit kann der Ausfallzeitpunkt verzögert werden.

Eine Anpassung in einem Hybridsystem kann bedeuten, den klassischen Generatorbetrieb schon bei höherem State of Charge (SOC) einzusetzen und somit einerseits Spannungsniveau des Bordnetzes zu erhöhen und anderseits den maximalen Energiedurchsatz bei einem Ereignis, wie beispielsweise einer Rekuperation, zu begrenzen. Die Erhöhung des Spannungsniveaus führt zu geringeren Strömen bei gleicher Leistung und somit zu einem geringeren Verlustleistungseintrag im Chip, was ebenso wie die Begrenzung des maximalen Energiedurchsatzes zu einer Reduktion der Temperaturhübe führt und im Allgemeinen das CO2-Potential weniger stark reduziert als klassische Abregelungsstrategien. In noch einer anderen Ausführungsform der Betriebsstrategieanpassung kann der Einsatz motorischer Betriebszustände eingeschränkt werden. In gleicher Weise wie eine Verringerung eines maximal zulässigen Generatorstroms haben diese Anpassungen den Effekt, dass sich die eingeprägte Verlustenergie und die daraus entstehenden Temperaturhübe verringern.

Dadurch wird auf die zunehmende Verschlechterung der Aufbau- und Verbindungstechnik mit geeigneten Maßnahmen reagiert und beispielsweise der Prozess der Lotzerrüttung verlangsamt.

Weiterhin kann in einem Fahrzeug auf eine anstehende Reparaturmaßnahme hingewiesen werden, ein Service-Intervall verkürzt werden und/oder ein Notfallbetrieb (Limp-Home-Strategie) eingeleitet werden.

Um den Zustand der Aufbau- und Verbindungstechnik zu ermitteln, wird eine Sensorik zur Ermittlung des Spannungsabfalls über einem Drain-Source-Anschluss eines MOSFETS oder eines Kollektor-Emitter-Anschlusses verwendet. In einer vorteilhaften Ausführungsform wird zusätzlich ein durch das Halbleiterbauelement 107-1 fließender Strom bestimmt, beispielsweise durch Verwendung eines Shunt-Widerstands. In einer weiteren Ausführungsform ist ein Temperatursensor in der Nähe des Halbleiterbauelements vorhanden. Die Maßnahme kann dabei abhängig davon sein, wie stark die ermittelten Messwerte von Referenzwerten abweichen

Wird bei einem oder mehreren Halbleiterbauelementen 107-1, 107-2 ein erhöhter Spannungsabfall bei gleichem Messstrom gemessen, wird dort eine höhere Verlustleistung eingeprägt. Da sich beispielsweise mit zunehmender Zerrüttung des Lots oder einer zunehmenden Degradation der Bondverbindung der elektrische Übergangswiderstand am Halbleiterbauelement vergrößert, können dadurch Rückschlüsse auf die Degradation der Aufbau- und Verbindungstechnik geschlossen werden.

Für die Ermittlung des Degradationsgrades der Aufbau- und Verbindungstechnik der Halbleiterbauelemente, wie beispielsweise MOSFETs oder IGBTs, werden inaktive Phasen der elektrischen Maschine während eines Fahrzyklus ausgenutzt. Die elektrische Maschine befindet sich dann in einer inaktiven Phase, wenn die Hochvoltbatterie ausreichend geladen ist. Aus Gründen der Energieeffizienz wird in dieser Situation eine Möglichkeit zur Rekuperation von Bremsenergie abgewartet, um das Bordnetz mit Energie zu versorgen. Während den inaktiven Phasen werden definierte Ströme durch die jeweiligen MOSFET- oder IGBT-Transistoren der Brückenschaltung geleitet und die entstehenden Spannungen über Drain und Source oder Kollektor und Emitter gemessen und untereinander verglichen. Bei einer gleichmäßigen Degradation aller Transistoren tritt ein gleicher Spannungsabfall über allen Bauteilen auf.

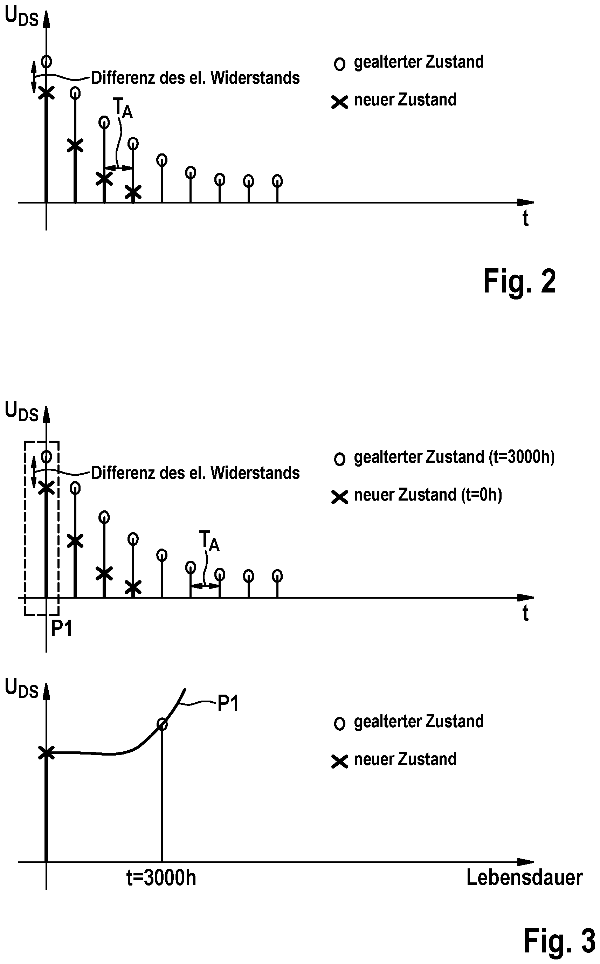

Fig. 2 zeigt einen Verlauf eines Spannungsabfalls U_{DS} während einem Betrieb eines Halbleiterbauelementes in einem gealterten Zustand (Kreise) und einem unverbrauchten, neuen Zustand (Kreuze) in Abhängigkeit der Betriebszeit t. Die Verlaufskurve besteht jeweils aus einer Mehrzahl von diskreten Messpunkten für einen Spannungsabfall U_{DS} über dem Halbleiterbauelement in einem zeitlichen Abstand T_{A}.

Vereinfachend ist die physikalische Größe U_{DS} für lediglich einen Transistor als Halbleiterbauelement 107-1 dargestellt. Im Allgemeinen gilt der Zusammenhang aber für alle in dem Umrichter 100 verwendeten Halbleiterbauelemente 107-1 und 107-2.

Eine Alterung der Aufbau- und Verbindungstechnik führt zu einer höheren thermischen Impedanz aufgrund einer Verringerung der Kontaktierungsfläche. Dies resultiert in einer verlangsamten Wärmeabfuhr und damit auch in einer langsamer absinkenden Spannungskurve U_{DS} über dem Halbleiterbauelement 107-1. Der zeitliche Abfall der Spannungskurve ist daher ein Maß für die thermische Impedanz des Halbleiterbauelementes.

Ein Halbleiterelement 107-1 mit einer ungealterten Aufbau- und Verbindungstechnik weist daher einen schnellen Abfall der Spannungskurve U_{DS} auf (Kreuze), während ein Halbleiterbauelement 107-1 mit einer gealterten Aufbau- und Verbindungstechnik einen langsamen Abfall der Spannungskurve U_{DS} aufweist (Kreise).

Fig. 3 zeigt den in Fig. 2 gezeigten Verlauf eines Spannungsabfalls U_{DS} während einem Betrieb eines Halbleiterbauelementes 107-1 und den Verlauf einer Anfangsspannung P1 in Abhängigkeit einer Gesamtbetriebszeit.

Um die allgemeine Alterung oder den Zustand der Verbindungstechnik zu bestimmen, werden Spannungswerte herangezogen, die beispielsweise jeweils am Anfang der Betriebszeit ermittelt werden, wie bei einer Bandendmessung der Brückenschaltung oder einem Erstbetrieb des Motors/Generators im Zielsystem. Bei der Ermittlung dieser Spannungswerte sollte sich die mithilfe eines Temperatursensors ermittelte Umgebungstemperatur in einem ähnlichen Bereich wie bei einer Vergleichs- oder Referenzmessung befinden.

Mit der Annahme, dass alle Halbleiterelemente ähnliche Umgebungsbedingungen sehen, können Unterschiede in den Umgebungsbedingungen im Vergleich zu den Referenzmessungen kompensiert werden, indem die Änderung des Spannungsabfalls zwischen den Halbleiterbauelementen verglichen wird, beispielsweise durch eine Medianbildung der Änderung des Spannungsabfalls nach Stromeintrag. Eine Verschiebung des Gesamtniveaus kann somit erkannt und entsprechend ausgewertet werden.

Die Anfangsspannung ist dabei der erste Messpunkt P1 des in Fig. 3 gezeigten Spannungsverlaufs. Dieser Wert ist im unteren Teil über eine Gesamtbetriebsdauer des Halbleiterbauelementes aufgetragen. Überschreitet die Gesamtbetriebsdauer einen kritischen Wert so steigt der Anfangsspannungsabfall U_{DS} an. Ab einem Überschreiten eines Spannungsreferenzwertes kann eine der oben beschriebenen Gegenmaßnahmen eingeleitet werden.

Im Hinblick auf die Erwärmung der thermischen Massen der Halbleiterbauelemente 107-1 und 107-2 sollte sichergestellt werden, dass möglichst identische Messbedingungen vorherrschen. Diese Bedingungen sind abhängig von der Aufbau und Verbindungstechnik und können im Voraus rechnerisch ermittelt werden. Mehrere in einem Speicher vorgespeicherte Referenzkurven unter jeweils unterschiedlichen Betriebsbedingungen führen dabei zu erweiterten Vergleichsmöglichkeiten im Betrieb. Der Speicher kann beispielsweise ein Computerspeicher sein, wie beispielsweise ein elektronischer RAM-Speicher, ein ROM-Speicher, ein Flash-Speicher oder auch ein magnetischer Speicher. Der Speicher kann in einem Steuergerät zum Steuern des Halbleiterbauelementes 107-1 vorgesehen sein.

Daneben kann über den Temperatursensor eine Temperatur festgelegt werden, bei der die Messung des Spannungsabfalls erfolgt.

Der zeitliche Abfall der Spannungskurve spiegelt direkt die thermische Impedanz und den Zustand der Aufbau- und Verbindungstechnik wieder. Um Ausreißer bei den Messungen unberücksichtigt zu lassen, kann eine durch Speicherung der Spannungskurve eine Tendenz für den Zustand der Aufbau- und Verbindungstechnik hinterlegt werden. Damit kann eine Genauigkeit einer Bestimmung für den Zustand der Aufbau- und Verbindungstechnik weiter verbessert werden.

Indem mehrere Spannungswerte unmittelbar nach dem Stromeintrag nacheinander ermittelt werden und eine Messkurve erzeugt wird oder die Tendenz über Lebensdauer verfolgt wird, kann die Aussagekraft über einen Zustand der Aufbau- und Verbindungstechnik erhöht werden.
Dadurch kann der Degradationsverlauf sowohl durch den Vergleich von Spanungsabfällen U_{DS} zwischen den verschiedenen Halbleitern 107-1 und 107-2 als auch im Verhältnis zu der Vorgeschichte des Halbleiters 107-1 überwacht werden. Dadurch kann berücksichtigt werden, dass sich der Originalzustand der Transistoren aufgrund von Fertigungstoleranzen unterscheidet.
Im Allgemeinen sollte für die verwendete Messmethodik gelten, dass keine zusätzliche Anregung eines Fehlerbilds erfolgt, keine Momentenbildung in der elektrischen Maschine stattfindet und eine signifikante Belastung der Spannungsversorgung unterbleibt. Diese Voraussetzungen können beispielsweise durch den Eintrag von kurzen, definierten Stromrampen erfüllt werden. Eine Plausibilisierung des eingeprägten Stroms kann über einen vorhandenen Stromsensor erfolgen.
Die Erfindung kann in Fahrzeugen in Boost-Rekuperationssystem (BRS) eingesetzt werden. Ein Einsatz in Startermotoren und Generatoren (SG) ist ebenfalls denkbar. Grundsätzlich kann die Erfindung jedoch in beliebigen Fahrzeug-Hybridsystemen und Generator- und Motoransteuerungen unter Verwendung von Brückenschaltungen Anwendung finden.

## Patentansprüche

1. Umrichter (100) für eine elektrische Maschine (103) mit einem an zumindest einer Kontaktierung (105-1) verbundenen Halbleiterbauelement (107-1) zum Umrichten einer Spannung, einer Spannungsmesseinrichtung (101) zum Messen eines Spannungsabfalls (U_{DS}) über dem Halbleiterbauelement (107-1) und einem Steuergerät zum Steuern des Halbleiterbauelements (107-1), wobei das Steuergerät ausgebildet ist, einen Zustand der Kontaktierung (105-1) anhand des gemessenen Spannungsabfalls (U_{DS}) zu bestimmen, wobei der Umrichter (100) ein erstes, mit einer ersten Kontaktierung (105-1) verbundenes Halbleiterbauelement (107-1) und ein zweites, mit einer zweiten Kontaktierung (105-3) verbundenes Halbleiterbauelement (107-2) aufweist und die Spannungsmesseinrichtung (101) ausgebildet ist, einen ersten Spannungsabfall über dem ersten Halbleiterbauelement (107-1) und einen zweiten Spannungsabfall über dem zweiten Halbleiterbauelement (107-2) zu messen, wobei das Steuergerät ausgebildet ist, den ersten Spannungsabfall und den zweiten Spannungsabfall zu vergleichen.

2. Umrichter (100) nach Anspruch 1, wobei das Halbleiterbauelement (107-1) ein Halbleiterschalter ist.

3. Umrichter (100) nach einem der vorangehenden Ansprüche, wobei das Halbleiterbauelement (107-1) ein Metall-Oxid-Halbleiter-Feldeffekttransistor (MOSFET) oder ein Bipolartransistor mit isolierter Gate-Elektrode (IGBT) ist.

4. Umrichter (100) nach Anspruch 3, wobei die Spannungsmesseinrichtung (101) elektrisch mit einem Drain-Anschluss (D) und einem Source-Anschluss (S) des Halbleiter-Feldeffekttransistor (MOSFET) verbunden ist oder die Spannungsmesseinrichtung (101) elektrisch mit einem Kollektor und einem Emitter des Bipolartransistors mit isolierter Gate-Elektrode (IGBT) verbunden ist.

5. Umrichter (100) nach einem der vorangehenden Ansprüche, wobei der Umrichter (100) eine Strommesseinrichtung (111) zum Messen eines Stromes durch das Halbleiterbauelement (107-1) aufweist.

6. Umrichter (100) nach Anspruch 5, wobei die Strommesseinrichtung (111) einen Shunt-Widerstand aufweist.

7. Umrichter (100) nach einem der vorangehenden Ansprüche, wobei der Umrichter (100) eine Temperaturmesseinrichtung zum Messen einer Temperatur des Halbleiterbauelementes (107-1) aufweist.

8. Umrichter (100) nach einem der vorangehenden Ansprüche, wobei der Umrichter (100) eine Leistungsbestimmungseinrichtung zum Bestimmen einer von dem Halbleiterbauelement (107-1) aufgenommenen Leistung aufweist.

9. Umrichter (100) nach einem der vorangehenden Ansprüche, wobei das Steuergerät ausgebildet ist, eine Spannungsverlaufskurve des Spannungsabfalls (U_{DS}) über dem Halbleiterbauelement (107-1) in Abhängigkeit einer Betriebszeit des Halbleiterbauelementes (107-1) zu bestimmen.

10. Umrichter (100) nach Anspruch 9, wobei das Steuergerät ausgebildet ist, einen zeitlichen Ableitungswert der Spannungsverlaufskurve zu bestimmen.

11. Umrichter (100) nach einem der Ansprüche 9 oder 10, wobei das Steuergerät einen Speicher zum Speichern von Spannungsverlaufskurven oder Spannungsabfallwerten zu einem bestimmten Zeitpunkt aufweist.

12. Umrichter (100) nach Anspruch 11, wobei das Steuergerät ausgebildet ist, im Speicher zu unterschiedlichen Zeitpunkten gespeicherte Spannungsverlaufskurven oder Spannungsabfallwerte zu vergleichen.

13. Verfahren zum Umrichten einer Spannung mit einem Umrichter (100) für eine elektrische Maschine (103) mit einem mit zumindest einer ersten Kontaktierung (105-1) verbundenen ersten Halbleiterbauelement (107-1) und einem zumindest mit einer zweiten Kontaktierung (105-3) verbundenen zweiten Halbleiterbauelement (107-2), mit den Schritten:
- Messen eines Spannungsabfalls (U_{DS}) über dem ersten Halbleiterbauelement (107-1)
- Messen eines Spannungsabfalls (U_{DS}) über dem zweiten Halbleiterbauelement (107-2)
- Vergleichen der gemessenen Spannungsabfälle (U_{DS}); und
- Bestimmen des Zustands der jeweiligen Kontaktierung (105-1, 105-3) in Abhängigkeit des Vergleichs.

## Claims

1. Converter (100) for an electric machine (103) having a semiconductor component (107-1) connected to at least one contact-connection (105-1) for converting a voltage, a voltage measurement device (101) for measuring a voltage drop (U_{DS}) across the semiconductor component (107-1) and a control unit for controlling the semiconductor component (107-1), wherein the control unit is designed to determine a state of the contact-connection (105-1) on the basis of the measured voltage drop (U_{DS}), wherein the converter (100) has a first semiconductor component (107-1) connected to a first contact-connection (105-1) and a second semiconductor component (107-2) connected to a second contact-connection (105-3) and the voltage measurement device (101) is designed to measure a first voltage drop across the first semiconductor component (107-1) and a second voltage drop across the second semiconductor component (107-2), wherein the control unit is designed to compare the first voltage drop and the second voltage drop.

2. Converter (100) according to Claim 1, wherein the semiconductor component (107-1) is a semiconductor switch.

3. Converter (100) according to either of the preceding claims, wherein the semiconductor component (107-1) is a metal-oxide-semiconductor field-effect transistor (MOSFET) or an insulated-gate bipolar transistor (IGBT).

4. Converter (100) according to Claim 3, wherein the voltage measurement device (101) is electrically connected to a drain terminal (D) and a source terminal (S) of the semiconductor field-effect transistor (MOSFET) or the voltage measurement device (101) is electrically connected to a collector and an emitter of the insulated-gate bipolar transistor (IGBT).

5. Converter (100) according to one of the preceding claims, wherein the converter (100) has a current measurement device (111) for measuring a current through the semiconductor component (107-1).

6. Converter (100) according to Claim 5, wherein the current measurement device (111) has a shunt resistor.

7. Converter (100) according to one of the preceding claims, wherein the converter (100) has a temperature measurement device for measuring a temperature of the semiconductor component (107-1).

8. Converter (100) according to one of the preceding claims, wherein the converter (100) has a power determination device for determining a power drawn by the semiconductor component (107-1).

9. Converter (100) according to one of the preceding claims, wherein the control unit is designed to determine a voltage profile curve of the voltage drop (U_{DS}) across the semiconductor component (107-1) depending on an operating time of the semiconductor component (107-1).

10. Converter (100) according to Claim 9, wherein the control unit is designed to determine a time derivative value of the voltage profile curve.

11. Converter (100) according to either of Claims 9 and 10, wherein the control unit has a memory for storing voltage profile curves or voltage drop values at a specific time.

12. Converter (100) according to Claim 11, wherein the control unit is designed to compare voltage profile curves or voltage drop values stored in the memory at different times.

13. Method for converting a voltage using a converter (100) for an electric machine (103) having a first semiconductor component (107-1) connected to at least one first contact-connection (105-1) and a second semiconductor component (107-2) connected to at least one second contact-connection (105-3), having the following steps:
- measuring a voltage drop (U_{DS}) across the first semiconductor component (107-1)
- measuring a voltage drop (U_{DS}) across the second semiconductor component (107-2)
- comparing the measured voltage drops (U_{DS}); and
- determining the state of the respective contact-connection (105-1, 105-3) depending on the comparison.

## Revendications

1. Convertisseur (100) pour une machine électrique (103), pourvu d'un composant à semi-conducteur (107-1) relié sur au moins un contact (105-1), destiné à convertir une tension, d'un dispositif de mesure de tension (101) pour la mesure d'une chute de tension (U_{DS}) via le composant à semi-conducteur (107-1) et d'un instrument de commande destiné à commander le composant à semi-conducteur (107-1), l'instrument de commande étant conçu pour déterminer un état du contact (105-1) à l'aide de la chute de tension (U_{DS}) mesurée,
le convertisseur (100) comportant un premier composant à semi-conducteur (107-1) relié avec un premier contact (105-1) et un deuxième composant à semi-conducteur (107-2) relié avec un deuxième contact (105-3) et le dispositif de mesure de tension (101) étant conçu pour mesurer une première chute de tension via le premier composant à semi-conducteur (107-1) et une deuxième chute de tension via le deuxième composant à semi-conducteur (107-2),
l'instrument de commande étant conçu pour comparer la première chute de tension et la deuxième chute de tension.

2. Convertisseur (100) selon la revendication 1, le composant à semi-conducteur (107-1) étant un commutateur à semi-conducteur.

3. Convertisseur (100) selon l'une quelconque des revendications précédentes, le composant à semi-conducteur (107-1) étant un transistor à effet de champ à grille métal-oxyde (MOSFET) ou un transistor bipolaire à électrode de grille (IGBT) isolée.

4. Convertisseur (100) selon la revendication 3, le dispositif de mesure de tension (101) étant électriquement relié avec une borne de drain (D) et avec une borne de source (S) du transistor à effet de champ à grille (MOSFET) ou le dispositif de mesure de tension (101) étant électriquement relié avec un collecteur et avec un émetteur du transistor bipolaire à électrode de grille (IGBT) isolée.

5. Convertisseur (100) selon l'une quelconque des revendications précédentes, le convertisseur (100) comportant un dispositif de mesure du courant (111) destiné à mesure un courant via le composant à semi-conducteur (107-1).

6. Convertisseur (100) selon la revendication 5, le dispositif de mesure du courant (111) comportant une résistance de shuntage.

7. Convertisseur (100) selon l'une quelconque des revendications précédentes, le convertisseur (100) comportant un dispositif de mesure de la température destiné à mesurer une température du composant à semi-conducteur (107-1).

8. Convertisseur (100) selon l'une quelconque des revendications précédentes, le convertisseur (100) comportant un dispositif de détermination de la puissance, destiné à déterminer une puissance absorbée par le composant à semi-conducteur (107-1) .

9. Convertisseur (100) selon l'une quelconque des revendications précédentes, l'instrument de commande étant conçu pour déterminer une courbe de tension de la chute de tension (U_{DS}) via le composant à semi-conducteur (107-1) en fonction d'un temps de fonctionnement du composant à semi-conducteur (107-1).

10. Convertisseur (100) selon la revendication 9, l'instrument de commande étant conçu pour déterminer une valeur de dérivation temporelle de la courbe de tension.

11. Convertisseur (100) selon l'une quelconque des revendications 9 ou 10, l'instrument de commande comportant une mémoire destinée à mémoriser des courbes de tension ou des valeurs de chute de tension à un moment déterminé.

12. Convertisseur (100) selon la revendication 11, l'instrument de commande étant conçu pour comparer des courbes de tension ou des valeurs de chute de tension mémorisées à différents moments dans la mémoire.

13. Procédé, destiné à convertir une tension à l'aide d'un convertisseur (100) pour une machine électrique (103), comportant un premier composant à semi-conducteur (107-1) relié avec au moins un premier contact (105-1) et un deuxième composant à semi-conducteur (107-2) relié avec au moins un deuxième contact (105-3), présentant les étapes consistant à :
- mesurer une chute de tension (U_{DS}) via le premier composant à semi-conducteur (107-1) ;
- mesurer une chute de tension (U_{DS}) via le deuxième composant à semi-conducteur (107-2) ;
- comparer les chutes de tension (U_{DS}) mesurées ; et
- déterminer l'état du contact (105-1, 105-3) respectif, en fonction de la comparaison.
